# EUROPÄISCHE PATENTANMELDUNG

(11) **EP 4 420 500 A1**
(43) Veröffentlichungstag der Anmeldung: **28.08.2024**
(21) Anmeldenummer: 24153291.0
(22) Anmeldetag: 22.01.2024
(51) Int. Cl.: A01B 59/00, A01B 59/04, A01B 63/10

(54) **HYDRAULISCHE ANORDNUNG ZUR VERSORGUNG EINES ANBAUGERÄTES MIT HYDRAULISCHER LEISTUNG**

(30) Priorität: 27.02.2023 DE 102023104693
(71) Anmelder: Deere & Company, Moline, IL 61265 (US)
(72) Erfinder: BILLICH, Manuel, 68163 Mannheim (DE)
(74) Vertreter: Dehnhardt, Florian Christopher

(57) **Zusammenfassung**

Die Erfindung betrifft eine hydraulische Anordnung (10) zur Versorgung eines Anbaugerätes (12) mit hydraulischer Leistung (p_a) eines landwirtschaftlichen Zugfahrzeugs (26). Dabei dient ein hydraulischer Arbeitsanschluss (16) zum Durchleiten eines pumpengeförderten Hydraulikmediums. Mit dem Arbeitsanschluss (16) ist ein Druckanschluss (18) hydraulisch verbunden zur Abgabe hydraulischer Leistung (p_a) an das Anbaugerät (12). Ein hydraulischer Rückmeldeanschluss (20) dient zum Empfangen eines hydraulischen Rückmeldedruckes (p_r) von dem Anbaugerät (12). Ein Signalanschluss (22) gibt ein Rückmeldesignal (s_r) in Abhängigkeit von dem hydraulischen Rückmeldedruck (p_r) ab. Zwischen dem hydraulischen Rückmeldeanschluss (20) und dem Signalanschluss (22) ist eine hydraulisch-elektrische Umwandlung des Rückmeldedruckes (p_r) in das Rückmeldesignal (s_r) vorgesehen.

## Beschreibung

Die Erfindung betrifft eine hydraulische Anordnung zur Versorgung eines Anbaugerätes mit hydraulischer Leistung eines landwirtschaftlichen Zugfahrzeugs.

Bekannte hydraulische Anordnungen zwischen der Fahrzeughydraulik und dem Anbaugerät ermöglichen eine hydraulische Regelung des Druckes bzw. der Fördermenge abhängig von den Erfordernissen des Anbaugerätes. Hierzu weist die hydraulische Anordnung unter anderem einen hydraulischen Rückmeldeanschluss zum Empfangen eines hydraulischen Rückmeldedruckes von dem Anbaugerät auf.

Der vorliegenden Erfindung liegt die Aufgabe zugrunde, das hydraulische Zusammenwirken eines landwirtschaftlichen Zugfahrzeugs mit einem Anbaugerät weiter zu verbessern.

Diese Aufgabe wird durch eine hydraulische Anordnung mit den Merkmalen des Patentanspruchs 1 gelöst.

Weitere vorteilhafte Ausgestaltungen der erfindungsgemäßen hydraulischen Anordnung gehen aus den Unteransprüchen hervor.

Gemäß Patentanspruch 1 weist eine hydraulische Anordnung zur Versorgung eines Anbaugerätes mit hydraulischer Energie bzw. Leistung eines landwirtschaftlichen Zugfahrzeugs (z.B. ein Traktor) mehrere spezifische Anschlüsse auf. Zu diesen Anschlüssen gehört ein hydraulischer Arbeitsanschluss zum Durchleiten eines pumpengeförderten Hydraulikmediums (z.B. Öl) in Richtung eines Druckanschlusses, welcher zur Abgabe hydraulischer Energie an das Anbaugerät ausgebildet ist. Außerdem ist an der hydraulischen Anordnung ein hydraulischer Rückmeldeanschluss vorhanden, an dem ein hydraulischer Rückmeldedruck von dem Anbaugerät empfangen wird. In Abhängigkeit von dem Rückmeldedruck generiert die hydraulische Anordnung ein Rückmeldesignal, welches an einem Signalanschluss der Anordnung bereitgestellt wird. Zwischen dem hydraulischen Rückmeldeanschluss und dem Signalanschluss erfolgt eine hydraulisch-elektrische Umwandlung des Rückmeldedruckes in das Rückmeldesignal.

Somit steht an dem Signalanschluss der hydraulischen Anordnung ein elektrisches Rückmeldesignal an. Entsprechend kann das Hydrauliksystem des Zugfahrzeugs in Abhängigkeit des elektrischen Rückmeldesignals gesteuert werden. Folglich ersetzt diese elektronische Steuerung zumindest teilweise eine herkömmliche hydraulische Steuerung und vereinfacht hierdurch die hydraulische Kopplungsstruktur zwischen dem Zugfahrzeug und dem Anbaugerät. Die Reduzierung hydraulischer Bauteile macht die hydraulische Kopplung zwischen dem Zugfahrzeug und dem Anbaugerät weniger störungsanfällig und den Arbeitseinsatz des Anbaugerätes effizienter. Zudem ermöglicht die elektronische Steuerung kürzere Reaktionszeiten im Hydrauliksystem des Zugfahrzeugs für die Anpassung des zu fördernden Druckes bzw. Volumenstromes.

In einer bevorzugten Ausführungsform weist die vorgenannte hydraulisch-elektrische Umwandlung zwischen dem hydraulischen Rückmeldeanschluss und dem elektrischen Signalanschluss eine Einrichtung zur Druckermittlung auf. Hierdurch kann das hydraulische Rückmeldesignal auf technisch zuverlässige Weise in ein elektrisches Rückmeldesignal umgewandelt werden. Insbesondere weist die Einrichtung zur Druckermittlung einen Drucksensor auf oder besteht aus einem solchen Drucksensor. Somit kann die Einrichtung zur Druckermittlung als standardmäßiges und zuverlässiges Bauteil kostengünstig zur Verfügung gestellt werden.

Im Sinne einer effizienten Steuerung der hydraulischen Kopplung zwischen dem Zugfahrzeug und dem Anbaugerät wirkt der elektrische Signalanschluss vorzugsweise mit einer elektrischen Steuereinheit zusammen, welche einen mit dem Signalanschluss verbundenen Steueranschluss aufweist.

Vorzugsweise weist die Steuereinheit einen Steuerausgang auf, welcher an eine Pumpensteuerung (z.B. elektromagnetisch) einer hydraulischen Pumpeneinheit des Hydrauliksystems des Zugfahrzeugs angeschlossen ist. Dabei ist ein Pumpenausgang der Pumpeneinheit mit dem Arbeitsanschluss der hydraulischen Anordnung hydraulisch verbunden. Somit kann eine hydraulische Verstellpumpe der Pumpeneinheit effizient elektronisch angesteuert werden, um den Druck und/oder Volumenstrom bzw. Förderstrom mit hoher Genauigkeit anzupassen.

Weiter vorzugsweise weist die Steuereinheit einen Sensoreingang auf, an welchen ein Signalausgang eines Drucksensors angeschlossen ist. Dabei ist ein Druckeingang des Drucksensors mit dem Arbeitsanschluss hydraulisch verbunden. Ein derart im Hydraulikkreislauf angeschlossener Drucksensor unterstützt eine präzise Steuerung zur Erreichung eines spezifischen Arbeitsdruckes an dem Arbeitsanschluss.

In einer bevorzugten Ausführungsform ist zwischen der Pumpensteuerung der Pumpeneinheit und einem Sensoranschluss der elektrischen Steuereinheit ein Verstellsensor zur Erfassung einer Verstellung (z.B. Positionsänderung, Bewegung) der Pumpensteuerung angeschlossen. Der Verstellsensor kann berührungslos oder in Kontakt mit dem zu erfassenden Objekt der Pumpensteuerung arbeiten. Mittels des Verstellsensors kann die Steuereinheit spezifische Signale im Zusammenhang mit einer Verstellung der Verstellpumpe auswerten. Auf diese Weise kann die Steuereinheit die Verstellpumpe noch präziser ansteuern und so die Effizienz bei der Erzielung eines spezifischen Arbeitsdruckes an dem Arbeitsanschluss verbessern.

In einer Ausführungsform sind der Arbeitsanschluss und der Druckanschluss ohne irgendeine Hydrauliklogik unmittelbar miteinander verbunden, z.B. durch eine Hydraulikleitung.

Hingegen ist in einer anderen bevorzugten Ausführungsform zwischen dem Arbeitsanschluss und dem Druckanschluss eine Hydrauliklogik vorgesehen. Hierbei handelt es sich um eine Einstellvorrichtung zur Einstellung des Hydraulikflusses in Richtung des Anbaugerätes. Mittels der Einstellvorrichtung kann der Hydraulikfluss, insbesondere Druck oder Fördermenge, zu dem Anbaugerät auf einen einstellbaren Wert begrenzt werden. Hierdurch kann die hydraulische Leistung des Zugfahrzeugs, insbesondere bei gleichzeitig anderen durchzuführenden Aufgaben, effizienter gesteuert und priorisiert werden, ohne dass hierfür eine fahrzeuginterne Steuerung mittels Steuerventilen oder dergleichen benötigt wird. Darüber hinaus vermeidet die mögliche Begrenzung des Hydraulikflusses zum Anbaugerät unnötige Leistungsverluste. Die entsprechend geringere Ölerwärmung und der geringere Verschleiß ermöglichen eine höhere Fahrzeugeffizienz und geringere Arbeitskosten.

Vorzugsweise weist die Einstellvorrichtung ein zwischen mehreren Schaltstellungen schaltbares hydraulisches Steuerventil auf. Insbesondere ist das Steuerventil als ein stetig verstellbares Wegeventil mit mehreren Zwischenstellungen und zwei Endstellungen ausgebildet (z.B. Proportionalventil), so dass der Hydraulikfluss präzise auf den gewünschten Wert einstellbar ist. In seiner Ausgangsstellung befindet sich das Wegeventil vorzugsweise in einer seiner Endstellungen (z.B. Ventil geschlossen für eine Unterbrechung des Hydraulikflusses oder Ventil vollständig geöffnet für ein Durchströmen des Hydraulikflusses). Die Ansteuerung bzw. Betätigung des Steuerventils erfolgt vorzugsweise elektrisch oder mechanisch.

Weiter vorzugsweise weist die Einstellvorrichtung einen Druckkompensator auf. Diese Maßnahme unterstützt stabile Druckverhältnisse in der Einstellvorrichtung. Insbesondere kann hierdurch der Druck am Druckanschluss auf einen spezifischen Wert geregelt werden bzw. der Druck auf diesem Wert gehalten werden, so dass unerwünschte Leistungsverluste technisch einfach vermieden werden.

In einer bevorzugten Ausführungsform sind der Druckkompensator und das Steuerventil der Einstellvorrichtung derart miteinander hydraulisch kombiniert, dass ein Förderausgang des Druckkompensators an einen Fördereingang des Steuerventils hydraulisch angeschlossen ist und/oder ein Förderausgang des Steuerventils an einen Steuereingang des Druckkompensators angeschlossen ist. Hierdurch werden die Druckverhältnisse in der Einstellvorrichtung und somit auch an dem Druckanschluss der hydraulischen Anordnung weiter stabilisiert. Insbesondere ermöglichen der Druckkompensator und die Einstellvorrichtung eine konstante Druckdifferenz zwischen dem Arbeitsanschluss und dem Druckanschluss der hydraulischen Anordnung.

Weiter bevorzugt sind der Arbeitsanschluss, der Druckanschluss, der Rückmeldeanschluss und der Signalanschluss der hydraulischen Anordnung als Schnittstellenanschlüsse einer Schnittstelleneinheit wirksam. Hierdurch kann die Schnittstelleneinheit als ein kompakter Bausatz bereitgestellt werden. Insoweit ist die hydraulische Anordnung auch montagefreundlich für eine Nachrüstung am Zugfahrzeug oder am Anbaugerät geeignet.

Alternativ sind die Merkmale der hydraulischen Anordnung zumindest teilweise Bestandteil des fahrzeuginternen Hydrauliksystems des Zugfahrzeugs.

Die erfindungsgemäße hydraulische Anordnung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein blockschaltbildartiges erstes Ausführungsbeispiel der erfindungsgemäßen hydraulischen Anordnung,
- Fig. 2a: ein blockschaltbildartiges erstes Ausführungsbeispiel einer hydraulischen Einstellvorrichtung innerhalb der Anordnung gemäß Fig. 1,
- Fig. 2b: ein blockschaltbildartiges weiteres Ausführungsbeispiel der hydraulischen Einstellvorrichtung, und
- Fig. 2c: ein blockschaltbildartiges weiteres Ausführungsbeispiel der hydraulischen Einstellvorrichtung.

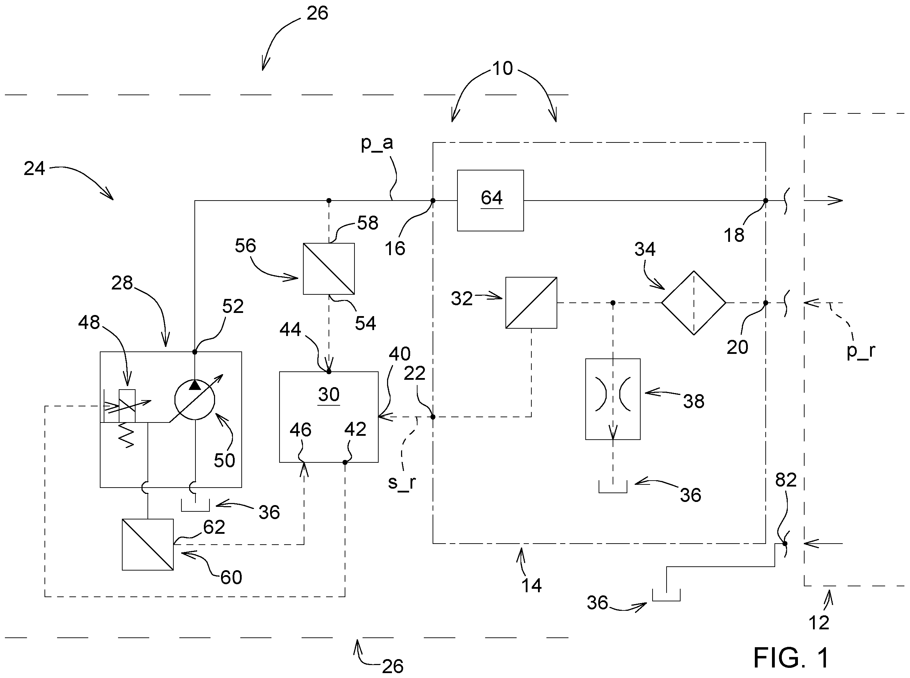

Fig. 1 zeigt eine hydraulische Anordnung 10, welche an ein schematisch strichliniert angedeutetes Anbaugerät 12 angeschlossen wird. Die Anordnung 10 enthält eine Schnittstelleneinheit 14 mit einem hydraulischen Arbeitsanschluss 16, einem hydraulischen Druckanschluss 18, einem hydraulischen Rückmeldeanschluss 20 und einem elektrischen Signalanschluss 22.

Die Schnittstelleneinheit 14 ist vorzugsweise als ein Bausatz ausgebildet und kann dann (auch nachträglich) an ein fahrzeuginternes Hydrauliksystem 24 eines landwirtschaftlichen Zugfahrzeugs 26, insbesondere eines Traktors, angeschlossen sein. Alternativ kann die Schnittstelleneinheit 14 Bestandteil des fahrzeuginternen Hydrauliksystems 24 sein.

Die hydraulische Anordnung 10 dient zur Versorgung des Anbaugerätes 12 mit hydraulischer Leistung des Zugfahrzeugs 26. Dabei dient der Arbeitsanschluss 16 zum Durchleiten eines von einer Pumpeneinheit 28 geförderten Hydraulikmediums (z.B. Öl). Der Druckanschluss 18 ist mit dem Arbeitsanschluss 16 hydraulisch verbunden und gibt hydraulische Leistung an das Anbaugerät 12 ab. Der Rückmeldeanschluss 20 empfängt einen hydraulischen Rückmeldedruck p_r des Anbaugerätes 12.

Der Signalanschluss 22 dient der Abgabe eines Rückmeldesignals s_r an eine elektrische Steuereinheit 30 in Abhängigkeit von dem hydraulischen Rückmeldedruck p_r. Zwischen dem Rückmeldeanschluss 20 und dem Signalanschluss 22 erfolgt eine hydraulisch-elektrische Signalumwandlung mittels einer Einrichtung zur Druckermittlung in Form eines Drucksensors 32.

Ein optionaler Filter 34 schützt den Hydraulikkreislauf vor Verschmutzung. Ein optionales, zwischen dem Drucksensor 32 und einem Hydrauliktank 36 angeordnetes Drossel- oder Stromregelventil 38 ermöglicht eine Reduktion des Rückmeldedruckes p_r.

Die Steuereinheit 30 weist einen Steueranschluss 40 zum Empfangen des Rückmeldesignals s_r auf. Weiterhin weist die Steuereinheit 30 einen Steuerausgang 42, einen Sensoreingang 44 und einen Sensoranschluss 46 auf.

Der Steuerausgang 42 ist an eine elektrisch betätigbare Pumpensteuerung 48 der Pumpeneinheit 28 angeschlossen. Letztere weist eine hydraulische Verstellpumpe 50 auf und ist über einen Pumpenausgang 52 mit dem Arbeitsanschluss 16 hydraulisch verbunden.

An den Sensoreingang 44 der Steuereinheit 30 ist ein Signalausgang 54 eines Drucksensors 56 angeschlossen, während ein Druckeingang 58 des Drucksensors 56 mit dem Arbeitsanschluss 16 hydraulisch verbunden ist. Auf diese Weise kann die Steuereinheit 30 den aktuellen Druck p_a an dem Arbeitsanschluss 16 erfassen und über die Pumpensteuerung 48 bei Bedarf anpassen.

Ein Verstellsensor 60 ist mit einem Signalausgang 62 an den Sensoranschluss 46 angeschlossen. Der Verstellsensor 60 erfasst eine Verstellung der Pumpensteuerung 48, insbesondere eine Positionsänderung oder eine Bewegung der Pumpensteuerung 48. Somit kann die Pumpeneinheit 28 mittels der Steuereinheit 30 noch präziser gesteuert werden.

Zwischen dem Arbeitsanschluss 16 und dem Druckanschluss 18 können unterschiedliche Varianten einer hydraulischen Verbindung realisiert sein. Hierfür steht symbolisch der Platzhalter 64.

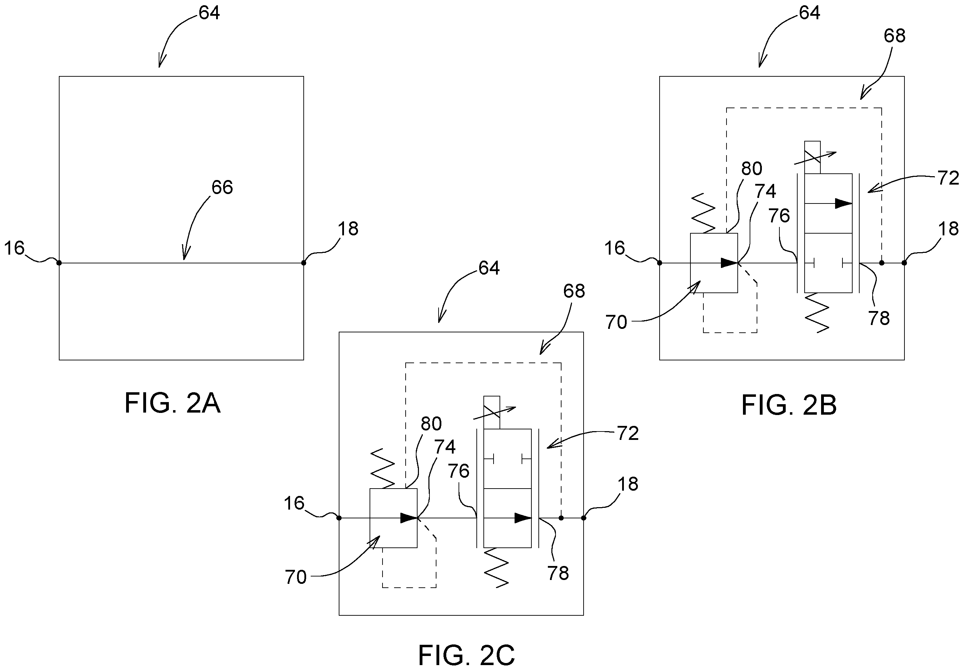

In der einfachsten Variante (Fig. 2a) ist der Platzhalter 64 als eine hydraulische Leitung 66 ausgebildet, so dass der Druck an den beiden Anschlüssen 16 und 18 etwa gleich ist.

Bei verschiedenen Anwendungsfällen ist es jedoch sinnvoll, den Hydraulikfluss, insbesondere den Förderstrom und/oder den Druck, an dem Druckanschluss spezifisch einzustellen oder zu begrenzen und deshalb den Platzhalter 64 als eine hydraulische Logik bzw. Einstellvorrichtung 68 auszubilden (Fig. 2b, Fig. 2c).

Hierzu weist die Einstellvorrichtung 68 einen Druckkompensator 70 und ein Steuerventil 72 auf. Das Steuerventil 72 ist als ein zwischen mehreren Schaltstellungen stetig verstellbares hydraulisches Wegeventil mit zwei Endstellungen ausgebildet.

Der Druckkompensator 70 und das Steuerventil 72 sind derart miteinander hydraulisch kombiniert, dass ein Förderausgang 74 des Druckkompensators 70 an einen Fördereingang 76 des Steuerventils 72 hydraulisch angeschlossen ist. Ein Förderausgang 78 des Steuerventils 72 ist an einen Steuereingang 80 des Druckkompensators 70 angeschlossen.

Mittels der beschriebenen hydraulischen Logik kann in der Einstellvorrichtung 68 eine konstante Druckdifferenz gewährleistet werden. Abhängig von der Ansteuerung des Steuerventils 72 kann ein maximaler Förderstrom eingehalten werden.

Das Steuerventil 72 ist elektrisch betätigbar. In anderen Ausführungsformen wird es z.B. mechanisch betätigt. Für das Steuerventil 72 sind unterschiedliche Ausgangsstellungen denkbar. In einer Variante (Fig. 2b) ist das Steuerventil 72 in seiner Ausgangsstellung für einen Hydraulikfluss gesperrt bzw. unterbrochen. Bei einer anderen Variante (Fig. 2c) ist das Steuerventil 72 in seiner Ausgangsstellung für einen Hydraulikfluss vollständig geöffnet.

Schließlich wird das über den Druckanschluss 18 geförderte Hydraulikmedium nach der Leistungsumsetzung im Anbaugerät 12 über einen Rücklaufanschluss 82 in den Hydrauliktank 36 des Zugfahrzeugs 26 zurückgeführt (Fig. 1).

## Patentansprüche

1. Hydraulische Anordnung (10) zur Versorgung eines Anbaugerätes (12) mit hydraulischer Leistung (p_a) eines landwirtschaftlichen Zugfahrzeugs (26), mit
- einem hydraulischen Arbeitsanschluss (16) zum Durchleiten eines pumpengeförderten Hydraulikmediums,
- einem mit dem Arbeitsanschluss (16) hydraulisch verbundenen Druckanschluss (18) zur Abgabe hydraulischer Leistung (p_a) an das Anbaugerät (12),
- einem hydraulischen Rückmeldeanschluss (20) zum Empfangen eines hydraulischen Rückmeldedruckes (p_r) von dem Anbaugerät (12), und
- einem Signalanschluss (22) zur Abgabe eines Rückmeldesignals (s_r) in Abhängigkeit von dem hydraulischen Rückmeldedruck (p_r),
wobei zwischen dem hydraulischen Rückmeldeanschluss (20) und dem Signalanschluss (22) eine hydraulisch-elektrische Umwandlung des Rückmeldedruckes (p_r) in das Rückmeldesignal (s_r) vorgesehen ist.

2. Anordnung nach Anspruch 1, **dadurch gekennzeichnet, dass** die hydraulisch-elektrische Umwandlung eine Drucksensorik (32) aufweist.

3. Anordnung nach Anspruch 1 oder 2, **gekennzeichnet durch** eine elektrische Steuereinheit (30), welche einen mit dem Signalanschluss (22) verbundenen Steueranschluss (40) aufweist.

4. Anordnung nach Anspruch 3, **dadurch gekennzeichnet, dass** die Steuereinheit (30) einen Steuerausgang (42) aufweist, welcher an eine Pumpensteuerung (48) einer hydraulischen Pumpeneinheit (28) angeschlossen ist, wobei die Pumpeneinheit (28) eine hydraulische Verstellpumpe (50) aufweist und ein Pumpenausgang (52) der Pumpeneinheit (28) mit dem Arbeitsanschluss (16) hydraulisch verbunden ist.

5. Anordnung nach Anspruch 3 oder 4, **dadurch gekennzeichnet, dass** die Steuereinheit (30) einen Sensoreingang (44) aufweist, an welchen ein Signalausgang (54) eines Drucksensors (56) angeschlossen ist, wobei ein Eingang (58) des Drucksensors (56) mit dem Arbeitsanschluss (16) hydraulisch verbunden ist.

6. Anordnung nach Anspruch 4 oder 5, **dadurch gekennzeichnet, dass** die Steuereinheit (30) einen Sensoranschluss (46) aufweist, an welchen ein Signalausgang (62) eines Verstellsensors (60) zur Erfassung einer Verstellung der Pumpensteuerung (48) angeschlossen ist.

7. Anordnung nach wenigstens einem der vorhergehenden Ansprüche, **dadurch gekennzeichnet, dass** zwischen dem Arbeitsanschluss (16) und dem Druckanschluss (18) eine Einstellvorrichtung (68) zur Einstellung des Hydraulikflusses hydraulisch zwischengeschaltet ist.

8. Anordnung nach Anspruch 7, **dadurch gekennzeichnet, dass** die Einstellvorrichtung (68) ein zwischen mehreren Schaltstellungen schaltbares hydraulisches Steuerventil (72), insbesondere Proportionalventil, aufweist.

9. Anordnung nach Anspruch 7 oder 8, **dadurch gekennzeichnet, dass** die Einstellvorrichtung (68) einen Druckkompensator (70) aufweist.

10. Anordnung nach Anspruch 9, **dadurch gekennzeichnet, dass** ein Förderausgang (74) des Druckkompensators (70) an einen Fördereingang (76) des Steuerventils (72) hydraulisch angeschlossen ist, und/oder ein Förderausgang (78) des Steuerventils (72) an einen Steuereingang (80) des Druckkompensators (70) angeschlossen ist.

11. Anordnung nach wenigstens einem der vorhergehenden Ansprüche, **dadurch gekennzeichnet, dass** der Arbeitsanschluss (16), der Druckanschluss (18), der Rückmeldeanschluss (20) und der Signalanschluss (22) als Schnittstellenanschlüsse einer Schnittstelleneinheit (14) wirksam sind.
